# EUROPEAN PATENT APPLICATION

(11) **EP 3 763 517 A1**
(43) Date of publication of application: **13.01.2021**
(21) Application number: 19315065.3
(22) Date of filing: 09.07.2019
(51) Int. Cl.: B29D 11/00

(54) **METHOD FOR MANUFACTURING A PHOTOCHROMIC OPTICAL ARTICLE**

(71) Applicant: Essilor International, 94220 Charenton-le-Pont (FR)
(72) Inventor: Lagasi, Matteo, 43121 Parma (IT); Dantas DE Morais, Tony, 94220 Charenton LE Pont (FR); Ng, Elvin, 81400 Senai Johor (MY)
(74) Representative: Jacobacci Coralis Harle

(57) **Abstract**

A method for manufacturing an optical article, such as an ophthalmic lens, with both photochromic and ultraviolet protecting properties, and to an optical article with said properties.

## Description

### TECHNICAL FIELD OF THE INVENTION

The invention relates to a method for manufacturing an optical article, such as an ophthalmic lens, with both photochromic and ultraviolet protecting properties, and to an optical article with said properties.

More precisely, the invention relates to a method for manufacturing an optical article comprising, embedded in a substrate, a laminate comprising at least a photochromic film and an ultraviolet radiation protective film and to an optical article with said structure.

### BACKGROUND INFORMATION AND PRIOR ART

Photochromic lenses are optical lenses with variable tint. Photochromic lenses are well known in the art and different processes for their manufacture have been described. The manufacture of optical lenses such as photochromic lenses classically requires the combination of several layers, each conferring a specific property to the optical lens. For instance, specific layers may confer ultraviolet protection or polarization to the optical lens. Manufacturing the layers stacks classically comprises a succession of depositing steps.

An existing method for embedding a specific layer or film in a lens comprising a thermosetting substrate comprises a step of inserting said film in a molding cavity of a mold assembly, pouring a polymerizable composition in said molding cavity and curing said polymerizable composition. There is thus obtained a sandwich wherein the specific film is embedded into the cured lens material. Such a method is disclosed for instance in US patent US 4,873,029. The embedded film is generally a polarizing film, as described in patent applications WO0191994 and WO200796425, but it may also be a photochromic film, as described in patent documents EP2040099 and US7858001. One advantage of such process is that the films embedded in the substrate are less prone to deterioration such as scratching than films deposited on the lens surface.

The disclosed processes allow the embedding of films with one specific property (polarizing, photochromic) between two substrate layers. However, the combination of different properties to be conferred to the same optical article requires additional coating steps of the cured substrate/film/substrate sandwich, or inclusion of specific additives in the liquid curable composition (bulk casting).

There thus still remains a need for methods allowing imparting several functionalities to the cast optical article in a single step.

### SUMMARY OF THE INVENTION

Therefore, the first object of the invention is a method for manufacturing an optical article, comprising:
(a) forming a laminate by laminating a photochromic film comprising at least one photochromic dye, optionally a polarizing film, and an ultraviolet radiation protective film,
(b) positioning the laminate obtained in step (a) or a part thereof in a molding cavity of a two part mold assembly,
(c) pouring in said molding cavity a polymerizable composition comprising at least one polymerizable monomer,
(d) curing the polymerizable composition comprising at least one polymerizable monomer poured in step (c) to form a substrate, and
(e) removing the optical article from the molding cavity,
   wherein the optical article comprises, in this order,
   - a first substrate layer,
   - a photochromic film comprising at least one photochromic dye,
   - an ultraviolet radiation protective film,
   - a second substrate layer, and
   - optionally a functional film, for instance a polarizing film, comprised between the first substrate layer and the photochromic film, between the photochromic film and the ultraviolet radiation protective film, or between the ultraviolet radiation protective film and the second substrate layer.

The method of the invention is a cost-efficient manufacturing method of photochromic optical articles affording the combination of photochromization with ultraviolet protection, and optionally polarization, without addition of process steps or complexities.

In particular, the photochromization, the ultraviolet protection, and optionally the polarization, are implemented at the casting step, no additional step is needed.

A second object of the invention is an optical article comprising, in this order:
- a first substrate layer,
- a protective film,
- a photochromic film comprising at least one photochromic dye,
- an ultraviolet radiation protective film,
- a second substrate layer, and
- optionally a functional film, for instance a polarizing film, comprised between the first substrate layer and the photochromic film, between the photochromic film and the ultraviolet radiation protective film, or between the ultraviolet radiation protective film and the second substrate layer.

### DETAILED DESCRIPTION

The following description will make it clear what the invention consists of and how it can be achieved.

### Method

The first object of the present invention is a method for manufacturing an optical article, comprising:
(a) forming a laminate by laminating a photochromic film comprising at least one photochromic dye, optionally a polarizing film, and an ultraviolet radiation protective film,
(b) positioning the laminate obtained in step (a) or a part thereof in a molding cavity of a two part mold assembly,
(c) pouring in said molding cavity a polymerizable composition comprising at least one polymerizable monomer,
(d) curing the polymerizable composition comprising at least one polymerizable monomer poured in step (c) to form a substrate, and
(e) removing the optical article from the molding cavity,
   wherein the optical article comprises, in this order,
   - a first substrate layer,
   - a photochromic film comprising at least one photochromic dye,
   - an ultraviolet radiation protective film,
   - a second substrate layer, and
   - optionally a functional film, for instance a polarizing film, comprised between the first substrate layer and the photochromic film, between the photochromic film and the ultraviolet radiation protective film, or between the ultraviolet radiation protective film and the second substrate layer.

The terms "in this order" mean that the incident light arriving on the optical article passes through the layers in this order. In particular, the incident light on the optical article passes through the photochromic film before passing through the ultraviolet radiation protective film.

The term "between" relative to the different films or layers does not necessarily mean that the layers are in contact with each other. Intermediate layers may be present between the concerned layers. In an embodiment, the term "between" means that the concerned layers are in contact with each other, and that no intermediate layer is present.

### Step (a)

The laminate according to the invention is obtained by the lamination of a film comprising at least one photochromic dye, an ultraviolet radiation protective film, and optionally a functional film, for instance a polarizing film. The laminate may comprise additional films to be laminated with the photochromic and ultraviolet radiation protective films and optionally the polarizing film, such as for instance additional active layers, for instance as a color layer.

The laminate may be manufactured according to conventional processes. For instance, the laminate may be manufactured by blow forming or thermoforming. The laminating process may include the use of at least one glue, for instance for improving adhesion of two films of the laminate with each other, or for improving adhesion of at least one side of the laminate to the substrate. The glues or adhesives that can be used in the laminating process of the invention are well-known in the art. The chemical structure of the glue will depend on the nature of the films to laminate and of the polymerizable composition, and the compatibility of the glue therewith. Preferably, the glue is an optically clear or transparent glue. The glue may be a thermally-curable glue, in particular when the laminate is manufactured by thermoforming. The glue may be for instance a (meth)acrylate-based glue.

The layers (the photochromic film, the ultraviolet radiation protective film, and optionally the functional film, for instance the polarizing film) are laminated in any order. Preferably, when present, the functional film, for instance the polarizing film, is laminated between the photochromic film and the ultraviolet radiation protective film. Thus, in a preferred embodiment, the laminate obtained in step (a) comprises, in this order, a photochromic film comprising at least one photochromic dye, a polarizing film, and an ultraviolet radiation protective film.

According to the invention, a "photochromic dye" can be any known optical photochromic dye. For example, naphthopyrans, fulgides, benzopyrans, fulgimides, spironaphthopyrans, spirobenzoxazines, spironaphthoxazines, spirobenzopyrans, and combinations thereof can be used. The photochromic dyes can be blended to achieve different performance and/or cosmetic characteristics. Preferably, the photochromic dye is a naphthopyran, in particular an indenonaphthopyran.

A "photochromic film" is a film comprising at least one photochromic dye as defined above. The photochromic film may for instance be a cellulose triacetate film or a cellulose acetate butyrate film, preferably a cellulose triacetate film, comprising at least one photochromic dye, preferably a naphthopyran, in particular an indenonaphthopyran.

A "film" refers to a simple unilayer, or to a laminated or stratified film comprising a plurality of layers having a single functionality, preferably to a simple unilayer.

A "functional film" is a film that imparts at least one property or functionality to the optical article. The functional film may be for instance a polarizing film, an infrared protective film or a blue-light cutting film.

A "polarizing film" is well known in the art and can be any polarizing film typically used for making polarized optical articles such as ophthalmic lenses. Preferably, the polarizing film is based on polyvinyl alcohol (PVA), typically with a thickness of between 5 - and 200 microns. In particular, the polarizing film is a uniaxially stretched PVA film. Alternatively, it may be based on polyethylene terephthalate or PET, typically with a thickness of between 50 and 500 microns. Such polarizing films, which may have a high polarization efficiency, are commercially available. Other polarizing films may include thin, multilayered polymeric materials, combined reflective and dichroic polarizers, or films of mixed polymeric phases such as those described in US 5,882,774, US 6,096,375 and US 5,867,316. In an embodiment, the polarizing film is a polyvinyl alcohol film.

An "infrared protective film" is a film comprising at least one infrared absorber additive. The infrared protective film is capable of decreasing light transmission in the infrared range, for instance at and over 750 nm. Preferably, the infrared protective film is capable of decreasing light transmission in the near infrared range, for instance from 780 nm to 1400 nm. Typical examples of infrared absorber additives that can be included in the infrared protective film of the invention are near infrared absorbers from various chemical families, for example from phthalocyanines, naphthalocyanines, azo compounds, polymethines, porphyrines, triphenylmethanes, iminiums, squaric acid compounds such as squaryliums, croconiums, dithiolenes such as nickel dithiolenes, quinones such as anthraquinones, perylenes such as polyperylenes, pyriliums, thiopyriliums, and cyanines. The near infrared absorber is preferably a polymethine, phthalocyanine, porphyrine, triphenylmethane, iminium, squarylium, croconium, dithiolene, quinone, polyperylene, pyrilium, thiopyrilium, or cyanine near infrared absorber. Suitable examples of additional near infrared absorbers are described for example, in Matsuoka, M. Infrared Absorbing Dyes, Plenum Press, New York, 1990 and Fabian, J., Nakazumi, H., Matsuoka, M. Near Infrared Absorbing Dyes, Chem. Rev. 1992, 92, 1197-1226. Specific examples of suitable near infrared absorbers are NIR-920A® and NIR-1031A®, both available from QCR Solutions Corp.

A "blue-light cutting film" is a film blocking at least partially potentially harmful blue light, in particular as regards the wavelength band which presents an increased risk (see especially Table B1, ISO 8980-3 standard:2003 (E) with reference to the B(λ) blue light hazard function). Many means for producing such a blue-light cutting film are known in the art, these means comprising absorption, reflection and interference techniques or combinations of these techniques. In an embodiment, the blue-light cutting film includes organic or inorganic compounds that absorb and/or reflect and/or interfere with the wavelengths of the blue light. The film may be made up of multiple thin films of organic and/or inorganic substances. Each layer may have properties that, in combination with the other layers, absorb, reflect or interfere with the wavelengths of the blue light. Among blue-light blocking substances, mention may be made of perylene, molecules based on porphyrin, coumarin and acrydine. In an embodiment of the invention, the blue-light cutting film consists of a multilayer, optionally a "rugate filter", of thin, preferably inorganic, dielectric layers having alternately low and high refractive indices, such as SiO₂ and TiO₂. Design parameters, such as the thickness of each thin layer, the refractive index of each layer and the number of layers, determine the performance of the multilayer. Filters of this type are described, inter alia, in U.S. Pat. No. 6,984,038 and No. 7,066,596. Generally, blue-light blocking filters are described in U.S. Pat. No. 8,360,574.

An "ultraviolet radiation protective film" is a film comprising at least one ultraviolet absorber additive. The ultraviolet radiation protective film is capable of decreasing light transmission in the ultraviolet range, for instance at and below 400 nm. Preferably, the ultraviolet radiation protective film is a UV400 protective film, meaning that the ultraviolet cutoff of said film is 400 nm, or that the film transmits less than 1% light up to 400 nm, based on its transmission curve. Typical examples of ultraviolet absorber additives that can be included in the ultraviolet radiation protective film of the invention are oxanilides, benzophenones, dihydroxybenzophenones, benzotriazoles, benzoates, phenyl benzoates, benzimidazoles, hydroxyphenyl triazines and sterically hindered amines (HALS). Such ultraviolet absorbers are commercially available especially under the trade names UVINUL® (BASF) and PARSOL® (GIVAUDAN). Preferably, the ultraviolet absorber additive is a benzotriazole. The ultraviolet radiation protective film may for instance be a cellulose triacetate film or a cellulose acetate butyrate film, preferably a cellulose triacetate film, comprising at least one ultraviolet absorber additive, in particular a benzotriazole.

The photochromic dyes and/or the ultraviolet absorber additives of the present invention may be independently incorporated into the respective film host material by various methods described in the art. Such methods include imbibition of the photochromic dye or the ultraviolet absorber additive into the host material by immersion of the host material in a hot solution of the photochromic dye or of the ultraviolet absorber additive. In an embodiment, the at least one photochromic dye is included in the photochromic film at a temperature inferior or equal to 80°C. Once included in the photochromic film, the at least one photochromic dye can preferably withstand oxidizing environment and/or exposure to temperatures up to 130°C.

In an embodiment, the photochromic film is a cellulose triacetate film comprising a photochromic dye, for instance a naphthopyran dye, and the ultraviolet radiation protective film is a cellulose triacetate film comprising an ultraviolet absorber additive, for instance a benzotriazole. The laminate obtained in this embodiment has shown a high thermostability that reinforces the ability of the laminate to withstand the casting process.

In a further embodiment, a protective film is inserted between the first substrate layer and the photochromic film. Said protective film aims in particular at protecting the photochromic film, and especially the photochromic dye comprised in the photochromic film, from any oxidizing species contained into the polymerizable composition (such as the catalyst, the resin, and/or the initiator) that could damage the photochromic elements contained into the film during the manufacture of the optical article. Said protective film can be inserted especially when no other layer is present between the first substrate layer and the photochromic film. Said protective film may be for instance laminated on the photochromic film in step (a), optionally in presence of a glue or adhesive as described above. Alternatively, the protective film may be positioned in the molding cavity at step (b) in contact with the laminate, preferably in contact with the side of the laminate comprising the photochromic film.

Examples of preferred materials for the protective film include acrylate resins, cellulose esters, and polycarbonate resins. In particular, the protective film comprises, preferably consists of, a cellulose triacetate film. It is preferable that the cast resin for the protective film does not include UV absorbers, which would significantly absorb or block the activation wavelength of the photochromic dye.

The insertion of a protective film in the optical article obtained by the method of manufacturing of the invention can impart interesting properties to the optical article, for instance in terms of activation and/or transmission. For instance, an optical article according to the invention which comprises a protective film may have better activation properties, for instance a shorter activation time, and/or an improved transmission, than those for an optical article not comprising such a protective film. For instance, the optical article obtained by the method of manufacturing of the invention which comprises a protective film, for instance a TAC protective film, may have a up to 20% darker transmission after activation when compared to a similar article not comprising a protective film.

The protective film, the photochromic film and/or the ultraviolet protective film may independently have a thickness of at least 80 microns, especially when they comprise cellulose triacetate. One skilled in the art classically knows the appropriate thickness to be used for each layer in particular in function of the desired properties and/or the material comprised in the layer.

### Step (b)

In some embodiments, for instance when the optical article is a lens, the optical article casting mold generally includes two substantially disc-shaped glass molds held by an annular closure such as a gasket or tape, preferably a gasket. The laminate may be mounted in the cavity of the mold so as to be parallel to the inner surface of the mold on the front side where the laminate surface faces, at a certain distance from two opposed surfaces of the mold.

The laminate may be positioned in the molding cavity as a whole, or it may be, before positioning in the molding cavity, cut into a wafer to provide it with an appropriate shape and/or size for fitting into the molding cavity or in view of the desired properties of the optical article to be obtained.

Before positioning in the molding cavity, the laminate or part thereof may be preformed to the desired curvature.

### Step (c)

The polymerizable composition according to the invention is a liquid composition comprising at least one polymerizable monomer. Preferably, the polymerizable composition comprises a thermosetting material. In an embodiment, the polymerizable composition comprises only one polymerizable monomer.

The polymerizable monomers comprised in the polymerizable composition are described below in the section relating to the substrate in step (d). In an embodiment, the at least one polymerizable monomer comprised in the polymerizable composition is selected from the group consisting of diethylene glycol bis(allylcarbonate), thiourethanes, and thermosetting urethanes. In particular, the polymerizable monomer is diethylene glycol bis(allylcarbonate).

The polymerizable composition according to the invention may also include additives which are conventionally employed in polymerizable compositions intended for molding optical articles, in particular ophthalmic lenses, in conventional proportions, namely inhibitors, dyes, ultraviolet absorbers, perfumes, deodorants, antioxidants, antiyellowing agents and release agents.

The perfumes allow the odor of the compositions to be masked, in particular during surfacing or routering operations.

Usual ultraviolet absorbers such as those commercialized under the tradenames UV 5411®, UV 9®, Tinuvin 400®, Tinuvin P®, Tinuvin 312®, Seesorb 701® and Seesorb 707® may be used in amounts generally up to 2% by weight of the total polymerizable monomers weight. Preferably, the ultraviolet absorber included in the polymerizable composition does not substantially absorb light with a wavelength over 360 nm.

The release agents may be comprised in the polymerizable composition in an amount up to 0.1% by weight of the total polymerizable monomer weight. Among the release agents may be cited mono and dialkylphosphates, silicones, fluorinated hydrocarbons, fatty acids and ammonium salts. The preferred release agents are mono and dialkylphosphates and mixtures thereof. Such release agents are disclosed for instance in patent documents US 4,975,328 and EP 271839.

The polymerizable composition is cured in step (d) to form the substrate. Preferably, the polymerized composition is self-supporting, *ie* is able to withstand its own shape without deformation, in the mold assembly when the annular closure of the two-part mold assembly (gasket or tape) has been removed.

The monomer liquid for the polymerizable composition is poured into the mold on either side of the laminate or part thereof.

### Step (d)

A "substrate", in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material can act as support for a stack of one or more coatings or layers.

The first and second substrate layers are preferably made of the same substrate.

The substrate may be made of thermosetting (cross-linked) organic glasses. Among appropriate thermosetting materials can be cited diethylene glycol bis(allylcarbonate) polymers and copolymers (in particular CR-39® from PPG Industries, Essilor Orma® lenses), polyurethanes, polythiourethanes, polyepoxides, polyepisulfides, poly(meth)acrylates and copolymers based substrates, such as substrates comprising (meth)acrylic polymers and copolymers derived from bisphenol-A, polythio(meth)acrylates, as well as copolymers thereof and blends thereof.

Additional examples of substrates suitable to the present invention are those obtained from thermosetting polythiourethane resins, which are marketed by the Mitsui Toatsu Chemicals company as MR series, in particular MR6®, MR7® and MR8® resins. These substrates as well as the monomers used for their preparation are especially described in the patents US 4,689,387, US 4,775,733, US 5,059,673, US 5,087,758 and US 5,191,055. An example of polymerizable composition comprising a poly(thio)urethane resin that can be used in the present invention is disclosed in patent application WO2007096425.

Preferred materials for the substrate are diethylene glycol bis(allylcarbonate) polymers. In a preferred embodiment, the substrate comprises, preferably is made of, diethylene glycol bis(allylcarbonate) polymer, marketed for instance as CR-39® from PPG Industries.

The polymerization conditions of the polymerizable composition differ depending on the composition of the polymerizable composition, the type and the used amount of catalyst, and the shape of the mold, but the polymerization may be performed at a temperature of 5°C to 140°C for 1 to 50 hours. In some cases, it is preferable that the temperature is maintained or is gradually increased in a temperature range of 5°C to 130°C, and the polymerizable composition is cured for 1 to 25 hours. One of ordinary skill in the art can determine, depending on the composition of the polymerizable composition, the type and the used amount of catalyst, and/or the shape of the mold, the appropriate conditions for the polymerization of the polymerizable composition. For instance, when the material to be polymerized is diethylene glycol-bis(allyl carbonate), the polymerization may be carried out by heating the mold to a maximum temperature of between about 60° C and about 90° C for a time of about 20 hours. Unless otherwise specified, the term "about" a value refers in the present invention to an interval comprised between ± 10% of said value.

### Step (e)

The optical article cured by polymerization is released from the mold, so as to obtain an optical article according to the present invention. The optical article is a photochromic and ultraviolet protective article that durably incorporates a photochromic film, an ultraviolet protective film and optionally a functional film, for instance a polarizing film, in its thickness. In an embodiment, the optical article removed in step (e) is an ophthalmic lens.

In a specific embodiment, the optical article removed in step (e) has at least one, preferably all, the following features:
- the substrate of the first and second substrate layers is selected from the group consisting of diethylene glycol bis(allylcarbonate) polymers and copolymers;
- the photochromic film comprising at least one photochromic dye is a cellulose triacetate film comprising at least one photochromic dye;
- the ultraviolet radiation protective film is a UV400 protective film;
- the optical article comprises a protective film between the first substrate layer and the photochromic film comprising at least one photochromic dye; and
- optionally a functional film, for instance a polarizing film, is comprised between the photochromic film and the ultraviolet radiation protective film.

### Optical article

Another object of the present invention is an optical article comprising, in this order:
- a first substrate layer,
- a protective film,
- a photochromic film comprising at least one photochromic dye,
- an ultraviolet radiation protective film,
- a second substrate layer, and
- optionally a functional film, for instance a polarizing film, comprised between the first substrate layer and the photochromic film, between the photochromic film and the ultraviolet radiation protective film, or between the ultraviolet radiation protective film and the second substrate layer.

The composition of the different layers of the optical article of the invention and preferred forms thereof are such as described above in the "method" section.

In an embodiment, the optical article comprises a functional film, for instance a polarizing film, between the photochromic film and the ultraviolet radiation protective film. Preferably, the polarizing film is a polyvinyl alcohol film.

In an embodiment, the protective film comprised in the optical article is a cellulose triacetate film.

In an embodiment, the substrate of the first and second substrate layers of the optical article is selected from the group consisting of diethylene glycol bis(allylcarbonate) polymers and copolymers.

In an embodiment, the optical article is obtainable or obtained by a method of manufacturing according to the invention.

The optical article according to the present invention is preferably a transparent optical article, preferably an optical lens or lens blank, and more preferably an ophthalmic lens or lens blank, in particular an ophthalmic lens.

Herein, the term "lens" means an organic or inorganic glass lens, comprising a lens substrate, which may be coated with one or more coatings of various natures.

The term "ophthalmic lens" is used to mean a lens adapted to a spectacle frame, for example to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified. Preferably, each film or layer in the present invention is transparent.

The following examples are provided as illustrative, and not limitative, embodiments of the present invention.

### Examples

### Example 1

A photochromic lens blank with the following structure was prepared according to the method of the invention:
- A layer of diethylene glycol-bis(allyl carbonate) CR-39® resin
- A layer of photochromic cellulose triacetate
- A layer of UV400 cellulose triacetate comprising benzotriazole
- A layer of diethylene glycol-bis(allyl carbonate) CR-39® resin.

### Example 2

A photochromic polar lens blank with the following structure was prepared according to the method of the invention:
- A layer of diethylene glycol-bis(allyl carbonate) CR-39® resin
- A layer of photochromic cellulose triacetate
- A layer of polyvinyl alcohol
- A layer of UV400 cellulose triacetate comprising benzotriazole
- A layer of diethylene glycol-bis(allyl carbonate) CR-39® resin.

In both examples 1 and 2, the photochromic dye is based on indenonaphthopyrans and each cellulose triacetate layer has a minimum thickness of 80 microns.

## Claims

1. A method of manufacturing an optical article, comprising:
(a) forming a laminate by laminating a photochromic film comprising at least one photochromic dye, optionally a polarizing film, and an ultraviolet radiation protective film comprising at least one ultraviolet absorber additive,
(b) positioning the laminate obtained in step (a) or a part thereof in a molding cavity of a two part mold assembly,
(c) pouring in said molding cavity a polymerizable composition comprising at least one polymerizable monomer,
(d) curing the polymerizable composition comprising at least one polymerizable monomer poured in step (c) to form a substrate, and
(e) removing the optical article from the molding cavity,
wherein the optical article comprises, in this order,
- a first substrate layer,
- a photochromic film comprising at least one photochromic dye,
- an ultraviolet radiation protective film,
- a second substrate layer, and
- optionally a functional film, for instance a polarizing film, comprised between the first substrate layer and the photochromic film, between the photochromic film and the ultraviolet radiation protective film, or between the ultraviolet radiation protective film and the second substrate layer.

2. A method of manufacturing an optical article according to claim 1, wherein the laminate obtained in step (a) comprises, in this order, a photochromic film comprising at least one photochromic dye, a functional film, for instance a polarizing film, and an ultraviolet radiation protective film.

3. A method of manufacturing an optical article according to claim 2, wherein the functional film is a polarizing film, and the polarizing film is a polyvinyl alcohol film.

4. A method of manufacturing an optical article according to anyone of claims 1 to 3, wherein the photochromic film comprising at least one photochromic dye is a cellulose triacetate film comprising at least one photochromic dye.

5. A method of manufacturing an optical article according to anyone of claims 1 to 4, wherein the photochromic dye is a naphthopyran.

6. A method of manufacturing an optical according to anyone of claims 1 to 5, wherein the optical article further comprises a protective film between the first substrate layer and the photochromic film comprising at least one photochromic dye.

7. A method of manufacturing an optical article according to anyone of claims 1 to 6, wherein the ultraviolet radiation protective film comprising at least one ultraviolet absorber additive is a cellulose triacetate film comprising at least one ultraviolet absorber additive.

8. A method of manufacturing an optical article according to anyone of claims 1 to 7, wherein the ultraviolet absorber additive is a benzotriazole.

9. A method of manufacturing an optical article according to anyone of claims 1 to 8, wherein the at least one polymerizable monomer comprised in the polymerizable composition is diethylene glycol bis(allylcarbonate).

10. A method of manufacturing an optical article according to anyone of claims 1 to 9, wherein:
- the substrate of the first and second substrate layers is selected from the group consisting of diethylene glycol bis(allylcarbonate) polymers and copolymers;
- the photochromic film comprising at least one photochromic dye is a cellulose triacetate film comprising at least one photochromic dye;
- the ultraviolet radiation protective film is a UV400 protective film;
- the optical article comprises a protective film between the first substrate layer and the photochromic film comprising at least one photochromic dye; and
- optionally a functional film, for instance a polarizing film, is comprised between the photochromic film and the ultraviolet radiation protective film.

11. A method of manufacturing an optical article according to anyone of claims 1 to 9, wherein the optical article is an ophthalmic lens.

12. An optical article comprising, in this order:
- a first substrate layer,
- a protective film,
- a photochromic film comprising at least one photochromic dye,
- an ultraviolet radiation protective film,
- a second substrate layer, and
- optionally a functional film, for instance a polarizing film, comprised between the first substrate layer and the photochromic film, between the photochromic film and the ultraviolet radiation protective film, or between the ultraviolet radiation protective film and the second substrate layer.

13. An optical article according to claim 12, comprising a functional film, for instance a polarizing film, between the photochromic film and the ultraviolet radiation protective film.

14. An optical article according to claim 13, wherein the polarizing film is a polyvinyl alcohol film.

15. An optical article according to anyone of claims 12 to 14, wherein the protective film is a cellulose triacetate film.
